# EUROPÄISCHE PATENTSCHRIFT

(11) **EP 3 704 924 B1**
(45) Veröffentlichungstag und Bekanntmachung des Hinweises auf die Patenterteilung: **27.12.2023**
(21) Anmeldenummer: 20160617.5
(22) Anmeldetag: 03.03.2020
(51) Int. Cl.: A01C 7/04, A01C 7/20

(54) **LANDWIRTSCHAFTLICHE MASCHINE MIT EINER LUFTLEITUNG**
AGRICULTURAL MACHINE WITH AN AIR DUCT
MACHINE AGRICOLE DOTÉE D'UNE CONDUITE D'AIR

(30) Priorität: 04.03.2019 DE 102019105352
(43) Veröffentlichungstag der Anmeldung: 09.09.2020
(73) Patentinhaber: Horsch Maschinen GmbH, 92421 Schwandorf (DE)
(72) Erfinder: Bergmann, Joachim, 92421 Schwandorf (DE); Pirkenseer, Manfred, 92421 Schwandorf (DE)
(74) Vertreter: v. Bezold & Partner Patentanwälte - PartG mbB

(56) Entgegenhaltungen:
- EP-A1- 2 805 596
- WO-A1-2010/059101
- DE-A1-102007 062 967
- DE-U1- 8 108 744
- US-A1- 2018 153 096

## Beschreibung

Die Erfindung betrifft eine landwirtschaftliche Maschine, umfassend eine Vereinzelungsvorrichtung (z. B. Dosiervorrichtung) zur Druckdifferenz-basierten Vereinzelung von Körnern (z. B. Saatgut, Dünger und/oder anderes Verteilgut etc.). Die Vereinzelungsvorrichtung dient vorzugsweise zur Montage an eine landwirtschaftliche Reiheneinheit. Die Erfindung umfasst insbesondere eine nach dem Überdruck-Prinzip arbeitende Vereinzelungsvorrichtung.

Die US 2018/153096 A1 z. B. offenbart eine druckdifferenz-basierte Vereinzelungsvorrichtung mit einer Luftleitung, die einen Mantel und einen Strömungsquerschnitt zum Leiten einer Luftströmung aufweist, wobei der Mantel einen seitlichen Einlass aufweist, um vereinzelte Körner druckluft-unterstützt zum Ackerboden zu transportieren. Aus dem Stand der Technik ist z. B. die WO 2010 059 101 A1 bekannt, die eine Druckdifferenz-basierte, insbesondere Überdruck-basierte Vereinzelungsvorrichtung offenbart, bei der vereinzelte Körner Druckluft-beschleunigt durch eine Kornleitung zu einer Saatfurche transportiert werden. Die Druckdifferenz-Erzeugung und der Druckluft-Transport werden mittels einer einzigen Druckluftzufuhr realisiert. Ein Druckluft-beschleunigter Transport der Körner hin zum Ackerboden ist zwar für manche Kornsorten vorteilhaft, für andere Kornsorten aber eher ungeeignet. Durch die Verwendung von nur einer einzigen Druckluftzufuhr ist eine Anpassung der Vereinzelung und/oder des Transports auf verschiedene Kornsorten nur bedingt möglich. Außerdem werden hierbei üblicherweise hohe Überdruckniveaus benötigt, um einerseits die Druckdifferenz zu erzeugen und andererseits den Druckluft-Transport zu ermöglichen.

Aus dem Stand der Technik ist zudem die EP 3 050 419 B1 bekannt, die eine Überdruck-basierte Vereinzelungsvorrichtung offenbart, bei welcher vereinzelte Körner Druckluft-beschleunigt durch eine Kornleitung transportiert werden. Die Druckdifferenz-Erzeugung und der Druckluft-Transport können mittels einer einzigen Druckluftzufuhr realisiert werden, wobei allerdings in einem Abgabebereich eine zusätzliche Druckluftzufuhr vorgesehen sein kann. Zwar kann damit eine gewisse Anpassung auf verschiedene Verteilgüter ermöglicht werden. Nachteilig ist jedoch, dass sich die unterschiedlichen Druckluftzufuhren durch deren jeweiligen Luftströmungen bzw. deren Strömungsgeschwindigkeiten und deren Druckniveaus negativ beeinflussen können, da für diese keine aufeinander abgestimmte Dimensionierung vorgesehen ist. So kann es, aufgrund der nicht aufeinander abgestimmten Dimensionierung, vorkommen, dass eine Übergabe von Körner von einem Vereinzelungsorgan in die Kornleitung nicht reibungslos erfolgt oder auch gänzlich scheitert.

Eine Aufgabe der Erfindung ist es, eine verbesserte und/oder alternative landwirtschaftliche Maschine, umfassend eine Vereinzelungsvorrichtung (z. B. Dosiervorrichtung) zur Druckdifferenz-basierten Vereinzelung von Körnern, zu schaffen, insbesondere eine z. B. für unterschiedliche Kornsorten und/oder universell einsetzbare Vereinzelungsvorrichtung.

Diese Aufgabe kann mit den Merkmalen des Anspruchs 1 gelöst werden. Vorteilhafte Weiterbildungen der Erfindung sind in den abhängigen Ansprüchen und der folgenden Beschreibung offenbart.

Die Erfindung betrifft eine landwirtschaftliche Maschine, umfassend eine Vereinzelungsvorrichtung (z. B. Dosiervorrichtung) zur Druckdifferenz-basierten Vereinzelung von Körnern (z. B. Saatgut, Dünger und/oder anderes Verteilgut etc.).

Die landwirtschaftliche Maschine umfasst eine Luftleitung, die einen Mantel und einen Strömungsquerschnitt zum Leiten (insbesondere Führen) einer Luftströmung aufweist.

Die landwirtschaftliche Maschine zeichnet sich unter anderem dadurch aus, dass die Luftleitung zumindest einen Luftleitabschnitt aufweist, um die Luftströmung radial einwärts zu lenken, z. B. so, dass sie vorzugsweise in und/oder in Strömungsrichtung hinter einem Kurvenabschnitt der Luftleitung z. B. radial einwärts konzentriert, insbesondere eingeschnürt werden kann.

Die landwirtschaftliche Maschine und insbesondere die Luftleitung zeichnet sich ergänzend vor allem dadurch aus, dass der Mantel in seiner Mantelfläche eine Durchlassöffnung (z. B. eine Aussparung) aufweist und der Mantel nach (insbesondere radial) innen geformt ist, um eine Vertiefung in Richtung der Durchlassöffnung zu bilden.

Es ist möglich, dass der Luftleitabschnitt zumindest zwei z. B. rinnenförmige Strömungskanäle im Strömungsquerschnitt bildet. Der Luftleitabschnitt kann somit vorzugsweise zumindest zwei Strömungskanäle umfassen.

Die zwei Strömungskanäle können z. B. mit einen Hauptströmungsabschnitt des Strömungsquerschnitts verbunden sein, um somit zweckmäßig den Strömungsquerschnitt ausbilden zu können.

Die Luftleitung weist einen zweckmäßig bogenförmigen Kurvenabschnitt auf, mit einem radial inneren Teilbereich und einem radial äußeren Teilbereich. Ergänzend kann die Luftleitung einen im Wesentlichen geradlinigen Teilabschnitt aufweisen, vorzugsweise in Strömungsrichtung hinter dem Kurvenabschnitt.

Es ist möglich, dass der Luftleitabschnitt im Kurvenbereich angeordnet ist und zwar vorzugsweise im radial äußeren Teilbereich des Kurvenabschnitts, so dass er z. B. im Kurvenabschnitt und zwar vorzugsweise vom radial äußeren Teilbereich des Kurvenabschnitts aus die Luftströmung zweckmäßig radial einwärts lenken kann. Alternativ oder ergänzend kann die Durchlassöffnung und/oder die Vertiefung im Kurvenbereich angeordnet sein und zwar vorzugsweise im radial äußeren Teilbereich des Kurvenabschnitts.

Es ist möglich, dass der Mantel und/oder der Strömungsquerschnitt zum radial inneren Teilbereich hin schmäler ist als zum radial äußeren Teilbereich hin.

Der Mantel und/oder der Strömungsquerschnitt kann sich z. B. von den zwei Strömungskanälen aus nach insbesondere radial einwärts verjüngen.

Der Mantel und/oder der Strömungsquerschnitt kann z. B. im Bereich des Luftleitabschnitts (z. B.im radial äußeren Teilbereich) breiter sein als im Bereich gegenüber dem Luftleitabschnitt (z. B. im radial inneren Teilbereich).

Es ist möglich, dass der Mantel einen nach innen geformten Mantelabschnitt aufweist und der Mantelabschnitt innenseitig konvex ausgebildet ist, um den Luftleitabschnitt zu bilden, und/oder außenseitig konkav ausgebildet ist, um die Vertiefung zu bilden. Es ist somit möglich, dass ein und derselbe Mantelabschnitt sowohl den Luftleitabschnitt als auch die Vertiefung ausbildet.

Der Luftleitabschnitt kann z. B. als länglicher Vorsprung ausgebildet sein, der sich z. B. in Längsrichtung der Luftleitung und/oder in Strömungsrichtung erstrecken kann und der insbesondere in den Strömungsquerschnitt hineinragen kann.

Die Vertiefung kann z. B. trichterförmig und/oder rinnenförmig ausgebildet sein und sich z. B. in Längsrichtung der Luftleitung und/oder in Strömungsrichtung erstrecken.

Es ist möglich, dass der Luftleitabschnitt und/oder die Vertiefung zur Durchlassöffnung führt, z. B. in Strömungsrichtung vor der Durchlassöffnung angeordnet ist und/oder in der Durchlassöffnung mündet.

Es ist möglich, dass der Mantel und/oder der Strömungsquerschnitt, insbesondere mittels des Luftleitabschnitts und/oder der Vertiefung, im Wesentlichen U- oder V-förmig ausgebildet ist.

Es ist möglich, dass die Luftleitung in Strömungsrichtung hinter dem Luftleitabschnitt und/oder in Strömungsrichtung hinter der Durchlassöffnung und/oder in Strömungsrichtung hinter dem Kurvenabschnitt einen im Wesentlichen geradlinigen Teilabschnitt aufweist.

Es ist möglich, dass der Luftleitabschnitt die Luftströmung z. B. radial einwärts lenkt, um die Luftströmung z. B. radial einwärts zu konzentrieren und/oder vom Innenumfang des Mantels z. B. radial einwärts beabstandet zu konzentrieren und zwar vorzugsweise im Kurvenabschnitt, insbesondere entlang der Durchlassöffnung, und/oder in Strömungsrichtung hinter der Durchlassöffnung.

Besonders bevorzugt ist, dass der Luftleitabschnitt die Luftströmung insbesondere radial einwärts lenken kann, um die Luftströmung im Wesentlichen in Strömungsquerschnitts-Mitte und/oder im Wesentlichen im Flächenschwerpunkt des Strömungsquerschnitts zu konzentrieren.

Die Luftströmung kann zweckmäßig im Kurvenabschnitt radial einwärts gelenkt und/oder konzentriert werden, sich aber in Strömungsrichtung hinter dem Luftleitabschnitt und/oder Kurvenabschnitt weiter einschnüren, z .B. mittels eines sich verjüngenden Strömungsquerschnitts.

Der Strömungsquerschnitt, insbesondere der Luftleitabschnitt, ermöglicht vor allem, dass sich die Luftströmung nicht im Strömungsquerschnitt entlang des radial äußeren Teilbereichs konzentriert, sondern sich die Luftströmung zweckmäßig radial einwärts konzentriert und somit insbesondere vom Innenumfang des Mantels, insbesondere vom radial äußeren Teilbereich, radial einwärts beabstandet konzentrieren kann, z. B. im Wesentlichen in Strömungsquerschnitts-Mitte.

Der Strömungsquerschnitt der Luftleitung ermöglicht vor allem, dass die Luftströmung sich entlang der Durchlassöffnung KE und in Strömungsrichtung hinter der Durchlassöffnung KE in Strömungsrichtung radial einschnürt und/oder nach insbesondere radial einwärts konzentriert

Es ist möglich, dass die Vertiefung in der Durchlassöffnung mündet und z. B. einen Eingang in die Durchlassöffnung bildet, insbesondere für vereinzelte Körner, wie weiter unten beschrieben.

Es ist möglich, dass sich zumindest eines von folgendem in Längsrichtung der Luftleitung und/oder in Strömungsrichtung verjüngt: der Strömungsquerschnitt, die zumindest zwei Strömungskanäle, der Luftleitabschnitt, die Vertiefung und/oder die Durchlassöffnung. Die Verjüngung kann z. B. im Kurvenabschnitt, z. B. im radial äußeren Teilbereich des Kurvenabschnitts, und/oder in Strömungsrichtung hinter dem Kurvenabschnitt zur Verfügung gestellt werden.

Es ist ebenfalls möglich, dass der Luftleitabschnitt sich im Querschnitt radial einwärts verjüngt, z. B. mittels zwei (vorzugsweise im Wesentlichen V- oder U-förmig) zulaufenden Seitenabschnitten. Alternativ oder ergänzend kann der Strömungsquerschnitt sich von den zwei Strömungskanälen vorzugsweise radial einwärts verjüngen.

Die landwirtschaftliche Maschine umfasst eine Vereinzelungsvorrichtung (z. B. Dosiervorrichtung) zur Druckdifferenz-basierten Vereinzelung von Körnern. Die Druckdifferenz kann vorzugsweise durch positive Druckluft erzeugt werden.

Die Luftleitung dient als Druckluftleitung, um vereinzelte Körner Druckluft-unterstützt, insbesondere Druckluft-beschleunigt, und somit z. B. gegenüber rein Schwerkraft-basiertem Transport schneller zum Ackerboden, insbesondere in eine Furche im Ackerboden, transportieren zu können.

Es ist möglich, dass die landwirtschaftliche Maschine ein drehbares (z. B. Scheiben-, Teller-, oder Trommel-förmiges) Vereinzelungsorgan (z. B. Dosierorgan) mit einer Vielzahl an Aussparungen zum Vereinzeln von Körnern aufweist.

Vom Vereinzelungsorgan vereinzelte und gelöste Körner können z. B. über die Durchlassöffnung in die Luftleitung eingeführt werden, vorzugsweise um von der zweckmäßig radial einwärts gelenkten und/oder konzentrierten Luftströmung mitgerissen und transportiert zu werden, z. B. in Richtung Ackerboden, insbesondre zu einer Furche im Ackerboden.

Die Vertiefung kann ausgebildet und angeordnet sein, um vom Vereinzelungsorgan vereinzelte und gelöste Körner aufzunehmen und/oder zweckmäßig zur Durchlassöffnung zu führen, z. B. um die Körner über die Durchlassöffnung in die Luftleitung einführen zu können, so dass die Körner von der insbesondere radial einwärts gelenkten und/oder konzentrierten Luftströmung mitgerissen und/oder transportiert werden können.

Es ist möglich, dass der Luftleitabschnitt die Luftströmung zweckmäßig radial einwärts lenkt, um insbesondere Körner zweckmäßig radial einwärts zu lenken und/oder vom Innenumfang des Mantels beabstandet zu halten, vorzugsweise so, dass Körner weniger dazu neigen, gegen den Innenumfang des Mantels zu stoßen, während sie in der Luftleitung zum Ackerboden transportiert werden.

Es ist möglich, dass die Durchlassöffnung und/oder der Mantel abschnittsweise durch das Vereinzelungsorgan geschlossen wird.

Die Durchlassöffnung kann vorzugsweise gegenüber einer Druckdifferenz-Unterbrechungseinrichtung (z. B. eine (vorzugsweise kammerförmige) Abdichtkonstruktion, eine Rolle, ein Dichtelement etc.) angeordnet sein. Die Druckdifferenz-Unterbrechungseinrichtung kann insbesondere die Druckdifferenz, die die Körner am Vereinzelungsorgan hält, unterbrechen, so dass sich die Körner vom Vereinzelungsorgan lösen und vorzugsweise über die Durchlassöffnung in die Luftleitung eingeführt werden können.

Es ist möglich, dass die Vereinzelungsvorrichtung eine erste Druckluftzufuhr (z. B. erste Druckluftquelle) zur Erzeugung der Luftströmung in der Luftleitung aufweist und/oder eine zweite Druckluftzufuhr (z. B Druckluftquelle) zur Erzeugung der Druckdifferenz zum Halten der Körner am Vereinzelungsorgan, insbesondere am oder in den Aussparungen des Vereinzelungsorgans, aufweist.

Die erste Druckluftzufuhr und/oder die zweite Druckluftzufuhr dienen insbesondere dazu, positive Druckluft zur Verfügung zu stellen.

Z. B. kann die erste Druckluftzufuhr deaktiviert werden, so dass Körner rein Schwerkraft-basiert zum Ackerboden transportiert werden können. Ferner kann z. B. die Stärke der von der ersten Druckluftzufuhr zur Verfügung gestellten Druckluft gesteuert werden, wodurch vorteilhaft eine Anpassung an z. B. unterschiedliche Kornsorten ermöglicht werden kann.

Entlang der Durchlassöffnung kann sich z. B. eine Strömungsbarriere bilden, z. B. durch einen sich einstellenden Coandá -Effekt. Dabei ist es möglich, dass Druckluft aus der ersten Druckluftzufuhr und Druckluft aus der zweiten Druckluftzufuhr aufeinander einwirken, so dass Druckluft aus der zweiten Druckluftzufuhr insbesondere durch die Druckluft aus der ersten Druckluftzufuhr an einem Eindringen in die Luftleitung im Wesentlichen gehindert wird, allerdings z. B. auch Druckluft aus der Luftleitung im Wesentlichen daran gehindert wird, über die Durchlassöffnung zu entweichen.

Der Strömungsquerschnitt verjüngt sich im Kurvenabschnitt in Strömungsrichtung und verjüngt sich vom radial äußeren Teilbereich des Kurvenabschnitts nach radial innen.

Die Luftleitung ist vorzugsweise als Rohr ausgeführt.

Die Luftleitung kann zweckmäßig aus einer z. B. einstückig-integralen Luftleitung (z. B. Luftleitrohr) oder aus z. B. mehreren aneinander gereihten und/oder aneinander befestigten Luftleitungsabschnitten (z. B. Luftleitrohrabschnitten) ausgebildet werden.

Die Erfindung umfasst des Weiteren eine Reiheneinheit, insbesondere eine landwirtschaftliche Vorrichtung mit einer Vielzahl an Reiheneinheiten, mit jeweils einer landwirtschaftlichen Maschine wie hierin offenbart.

Die Erfindung kann zweckmäßig bei generell nach dem Prinzip der Druckdifferenz (Differenzdruckprinzip) arbeitenden Vereinzelungsvorrichtungen eingesetzt werden und umfasst vorzugsweise mit positiver Druckluft und somit insbesondere mit Überdruck arbeitende Vereinzelungsvorrichtungen.

Die zuvor beschriebenen bevorzugten Ausführungsformen und Merkmale der Erfindung sind zweckmäßig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht einer landwirtschaftlichen Maschine mit einer Luftleitung gemäß einer Ausführungsform der Erfindung,
- Figur 2: eine andere Seitenansicht der landwirtschaftlichen Maschine,
- Figur 3: eine perspektivische Ansicht der landwirtschaftlichen Maschine,
- Figur 4: eine andere perspektivische Ansicht der landwirtschaftlichen Maschine,
- Figur 5: eine Luftleitung für eine landwirtschaftliche Maschine gemäß einer Ausführungsform der Erfindung,
- Figur 6: eine perspektivische Ansicht der landwirtschaftlichen Maschine,
- Figur 7: eine andere perspektivische Ansicht der landwirtschaftlichen Maschine,
- Figuren 8 bis 12: unterschiedliche Ansichten einer Luftströmung in einer Luftleitung für eine landwirtschaftliche Maschine gemäß einer Ausführungsform der Erfindung,
- Figur 13: eine Luftleitung für eine landwirtschaftliche Maschine gemäß einer Ausführungsform der Erfindung,
- Figur 14: eine Reiheneinheit mit einer landwirtschaftlichen Maschine gemäß einer Ausführungsform der Erfindung, und
- Figur 15: eine Perspektivansicht einer landwirtschaftlichen Vorrichtung mit einer Vielzahl an Reiheneinheiten.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen. Ferner ist zu erwähnen, dass in manchen Figuren zu Darstellungszwecken Teilabschnitte ausgeblendet sind.

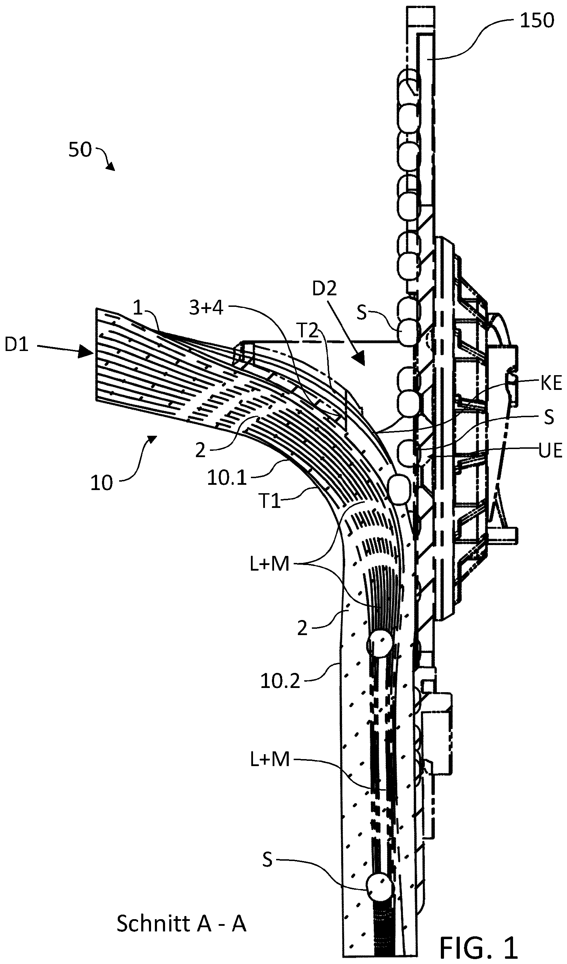

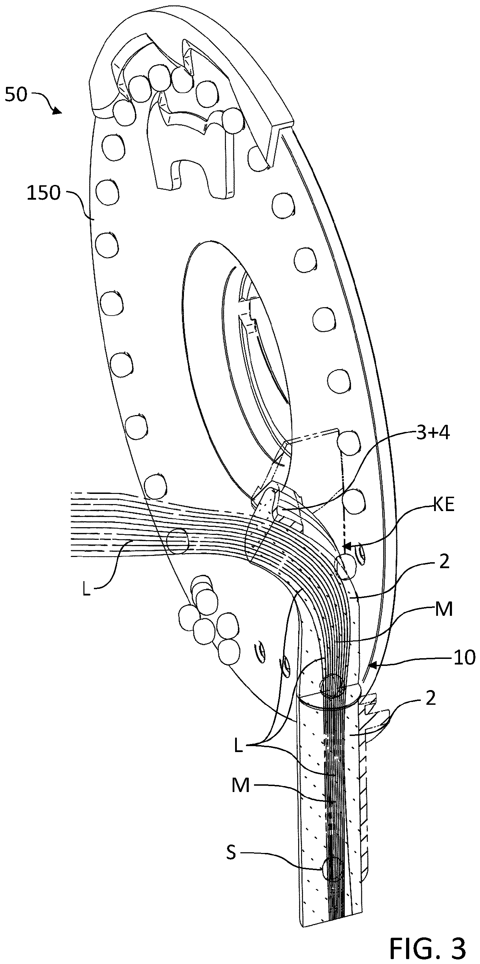

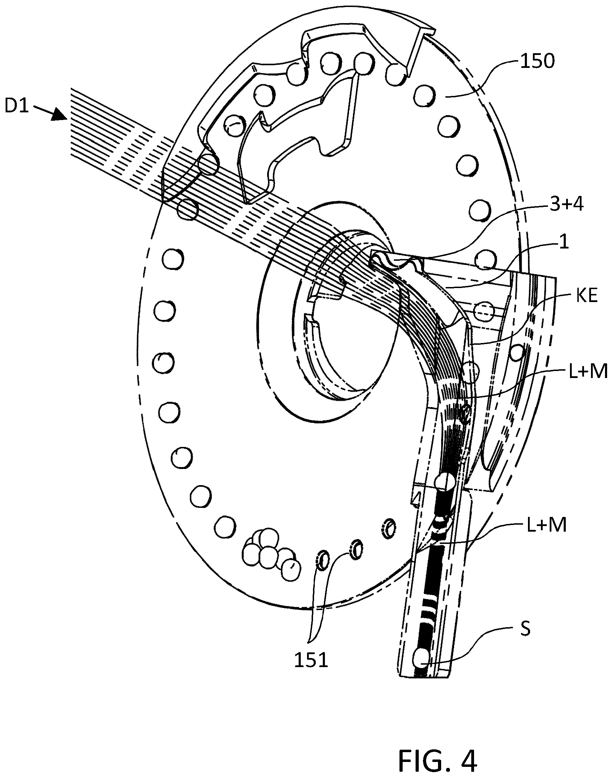

Die Figuren 1 bis 4 zeigen unterschiedliche Ansichten einer landwirtschaftlichen Maschine 50 mit einer Luftleitung 10 gemäß einer Ausführungsform der Erfindung. Die landwirtschaftliche Maschine 50 wird nachfolgend unter gemeinsamer Bezugnahme auf die Figuren 1 bis 4 beschrieben.

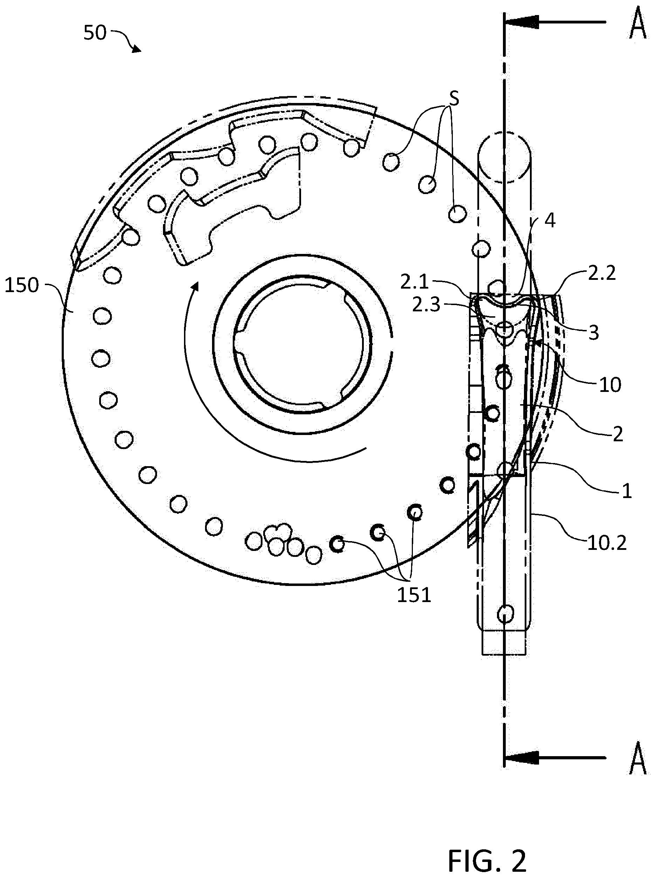

Die landwirtschaftliche Maschine 50 ist beispielhaft als Vereinzelungsvorrichtung 50 zur Druckdifferenz-basierten Vereinzelung von Körnern S (z. B. Saatgut etc.)mittels eines drehbaren Vereinzelungsorgans 150 ausgebildet. Das Vereinzelungsorgan 150 ist z. B. eine Vereinzelungsscheibe (Dosierscheibe) 150 und umfasst eine Vielzahl an Aussparungen 151 zum Halten und Vereinzeln der Körner S. Der Drehpfeil in Figur 2 kennzeichnet die Drehrichtung der Vereinzelungsscheibe 150 im Betrieb.

Die landwirtschaftliche Maschine 50 umfasst eine Luftleitung 10. Die Luftleitung 10 umfasst einen Mantel 1 mit einer Mantelfläche und einen Strömungsquerschnitt 2 zum Leiten einer Luftströmung L. Der Strömungsquerschnitt 2 umfasst zweckmäßig eine Strömungsquerschnitts-Mitte M, insbesondere einen Flächenschwerpunkt M. In der Mantelfläche des Mantels 1 ist eine sich z. B. in Strömungsrichtung erstreckende Durchlassöffnung KE (z. B. Aussparung) ausgebildet, über die von der Vereinzelungsscheibe 150 vereinzelte und gelöste Körner S in die Luftleitung 10 und insbesondere in die Luftströmung L einführbar sind.

Eine erste Druckluftzufuhr D1 versorgt die Luftleitung 10 mit positiver Druckluft, so dass die Luftströmung L erzeugt werden kann.

Eine zweite Druckluftzufuhr D2 erzeugt mittels positiver Druckluft eine Druckdifferenz, um die Körner S an oder in den Aussparungen 151 Druckdifferenz-basiert zu halten.

Die Luftleitung 10 umfasst einen Kurvenabschnitt 10.1 mit einem radial inneren Teilbereich T1 und einem radial äußeren Teilbereich T2. In Strömungsrichtung hinter dem Kurvenabschnitt 10.1 umfasst die Luftleitung 10 einen im Wesentlichen geradlinigen Teilabschnitt 10.2.

Eine Druckdifferenz-Unterbrechungseinrichtung UE (z. B. eine Abdichtkonstruktion, eine Rolle, ein Dichtelement etc.) kann die Druckdifferenz unterbrechen, so dass Körner S sich von der Vereinzelungsscheibe 150 lösen und über die in der Mantelfläche des Mantels 1 ausgebildete Durchlassöffnung KE in die Luftleitung 10 und insbesondere die Luftströmung L einführbar sind.

Die Durchlassöffnung KE erstreckt sich insbesondere im radial äußeren Teilbereich T2 des Kurvenabschnitts 10.1.

Der Kurvenabschnitt der Luftleitung würde bei einem z. B. wie üblich runden, insbesondere kreisrunden Strömungsquerschnitt dazu führen, dass die Luftströmung sich im Strömungsquerschnitt entlang des radial äußeren Teilbereichs konzentrieren würde. Auch in Strömungsrichtung hinter dem Kurvenabschnitt und somit im im Wesentlichen geradlinigen Teilabschnitt der Luftleitung würde die Luftströmung im Strömungsquerschnitt sich radial außenliegend entlang des Mantels konzentrieren. Eine radial außenliegend konzentrierte Luftströmung würde aber dazu führen, dass Körner im Strömungsquerschnitt der Luftleitung ebenfalls radial außenliegend transportiert werden und deshalb dazu neigen, von innen gegen den Mantel der Luftleitung zu stoßen, was einen kontrollierten Korntransport und somit eine kontrollierte Kornabgabe im Ackerboden nachteilhaft beeinflussen kann.

Eine Besonderheit der in den Figuren 1 bis 4 gezeigten Vereinzelungsvorrichtung 50 ist deshalb die Luftleitung 10 mit einem Strömungsquerschnitt 2 zur gezielten Beeinflussung der Luftströmung L, insbesondere mit verbesserter Luftströmungskonzentration und alternativ oder ergänzend mit verbesserter Kornaufnahmegeometrie.

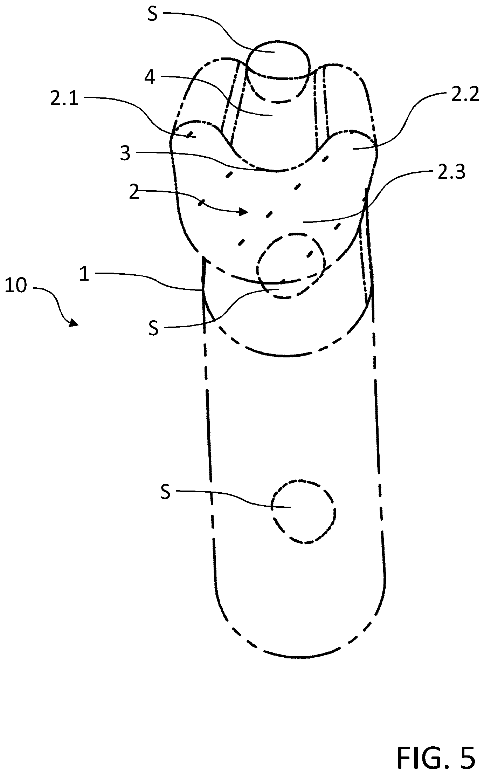

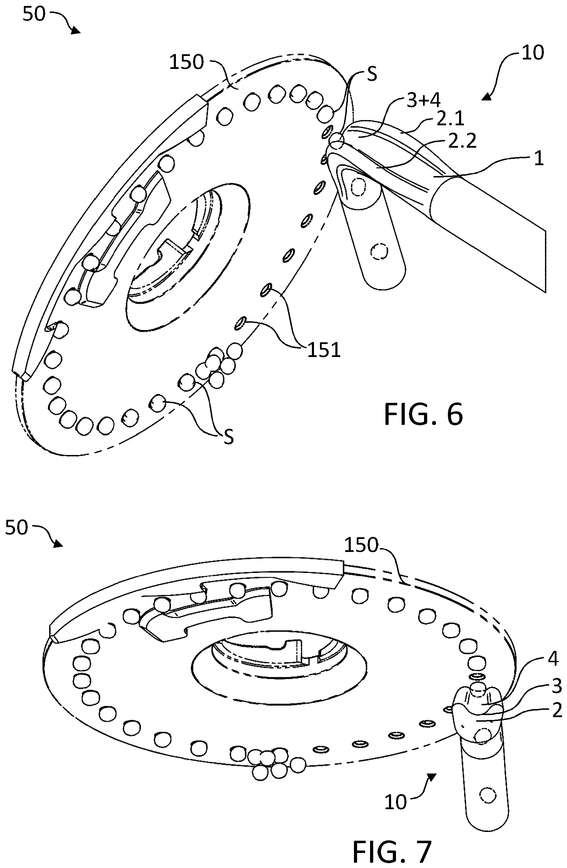

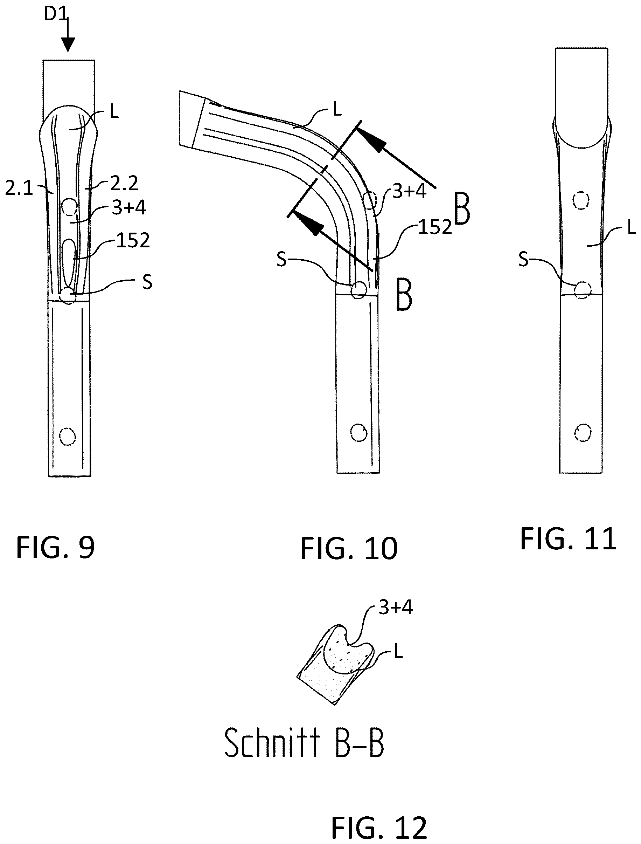

Die Luftleitung 10 umfasst zumindest einen Luftleitabschnitt 3, um die Luftströmung L zweckmäßig radial einwärts zu lenken und insbesondere radial einwärts zu konzentrieren. Der Luftleitabschnitt 3 erzeugt im Strömungsquerschnitt 2 zwei vorzugsweise rinnenförmige Strömungskanäle 2.1, 2.2, die z. B. mit einem Hauptströmungsabschnitt 2.3 verbunden sein können, um den Strömungsquerschnitt 2 zu bilden (siehe z. B. auch Figuren 5 bis 13).

Der Luftleitabschnitt 3 mit insbesondere den zwei Strömungskanälen 2.1, 2.2 ermöglicht, dass sich die Luftströmung L nicht im Strömungsquerschnitt 2 entlang des radial äußeren Teilbereichs T2 konzentriert, sondern sich die Luftströmung L zweckmäßig radial einwärts und somit insbesondere vom radial äußeren Teilbereich T2 radial einwärts beabstandet konzentriert und zwar vorzugsweise im Wesentlichen im Flächenschwerpunkt M des Strömungsquerschnitts 2.

Der Strömungsquerschnitt 2 der Luftleitung 10 führt vor allem dazu, dass die Luftströmung L sich entlang der Durchlassöffnung KE und in Strömungsrichtung hinter der Durchlassöffnung KE in Strömungsrichtung radial einwärts einschnürt und/oder vom Innenumfang des Mantels 1 nach insbesondere radial einwärts konzentriert.

Daraus folgt, dass in der Luftströmung L transportierte Körner S vom Innenumfang des Mantels 1 ebenfalls zweckmäßig radial einwärts beabstandet transportiert werden können und folglich nicht oder weniger oft von innen gegen den Mantel 1 stoßen. Mit anderen Worten können folglich Körner S im Wesentlichen in Luftleitungs-Mitte und/oder im Wesentlichen im Flächenschwerpunkt des Strömungsquerschnitts 2 transportiert werden, was die Wahrscheinlichkeit reduziert, dass die Körner S gegen den Mantel 1 stoßen.

Die Luftleitung 10 umfasst alternativ oder ergänzend einen zweckmäßig radial nach innen geformten Mantel 1, um eine Vertiefung 4 in Richtung der Durchlassöffnung KE zu bilden.

Durch die nach innen geformte und in der Durchlassöffnung KE mündende Vertiefung 4 wird ermöglicht, dass Körner S leichter in die durch den Luftleitabschnitt 3 radial einwärts gelenkte und zweckmäßig konzentrierte Luftströmung L abgegeben werden können.

Der Mantel 1 ist nach innen geformt, so dass er innenseitig konvex ausgebildet ist, um den Luftleitabschnitt 3 zu bilden, und zugleich außenseitig konkav ausgebildet ist, um die Vertiefung 4 zu bilden.

Die Luftleitung 10 ermöglicht somit einerseits eine verbesserte Abgabe vereinzelter Körner S in die Luftströmung L und andererseits einen verbesserten Transport der Körner S in der Luftleitung 10 zum Ackerboden, weil die Körner S mittels der vorzugsweise im Wesentlichen in Strömungsquerschnitts-Mitte M, insbesondere im Wesentlichen im Flächenschwerpunkt M des Strömungsquerschnitts 2 konzentrierten Luftströmung L weniger oder gar nicht dazu neigen, von innen gegen den Mantel 1 zu stoßen.

Der Luftleitabschnitt 3, die Vertiefung 4 und die Durchlassöffnung KE erstrecken sich zweckmäßig im Kurvenabschnitt 10.1 und zwar vorzugsweise im radial äußeren Teilbereich T2.

Eine weitere Besonderheit ist, dass sich entlang der Durchlassöffnung KE eine Strömungsbarriere ausbilden kann, insbesondere bewirkt durch einen Coandá-Effekt.

Druckluft aus der ersten Druckluftzufuhr D1 und Druckluft aus der zweiten Druckluftzufuhr D2 wirken entlang der Durchlassöffnung KE so aufeinander ein, dass einerseits im Wesentlichen keine mittels der ersten Druckluftzufuhr D1 zur Verfügung gestellte Druckluft aus der Luftleitung 10 über die Durchlassöffnung KE nach außen gelangt und andererseits im Wesentlichen keine mittels der zweiten Druckluftzufuhr D2 zur Verfügung gestellte Druckluft über die Durchlassöffnung KE in die Luftleitung 10 hinein gelangt.

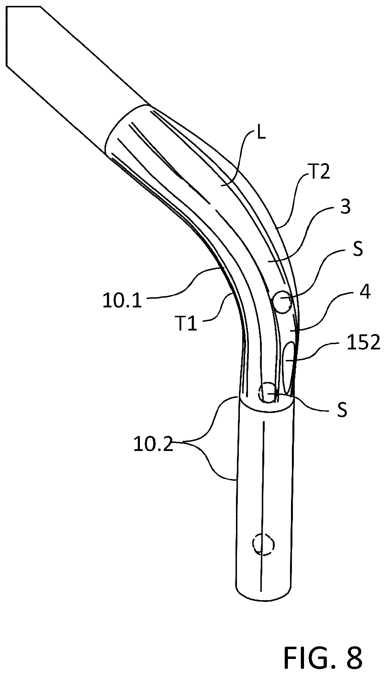

Die Figuren 5 bis 7 und 13 zeigen unterschiedliche Ansichten einer Luftleitung 10 gemäß einer Ausführungsform der Erfindung insbesondere zur Verwendung mit einer landwirtschaftlichen Maschine 50 wie z. B. in den Figuren 1 bis 4 gezeigt. Die Figuren 8 bis 12 zeigen Luftströmungen L in der Luftleitung 10. Obwohl in den Figuren 8 bis 12 die Luftleitung 10 nicht direkt abgelichtet ist, sind zum besseren Verständnis Bezugszeichen der Luftleitung 10 eingezeichnet. Die Luftleitung 10 und die zugehörigen Luftströmungen L werden nachfolgend unter gemeinsamer Bezugnahme auf die Figuren 5 bis 13 beschrieben.

Die Luftleitung 10 umfasst einen Kurvenabschnitt 10.1 mit einem radial inneren Teilbereich T1 und einem radial äußeren Teilbereich T2 und einen in Strömungsrichtung dahinter angeordneten im Wesentlichen geradlinigen Teilabschnitt 10.2.

Der Luftleitabschnitt 3 ist als länglicher Vorsprung ausgebildet ist, der sich in Längsrichtung der Luftleitung 10 und somit in Strömungsrichtung erstreckt.

Die Vertiefung 4 kann zumindest abschnittsweise trichterförmig und insbesondere rinnenförmig ausgebildet sein und sich ebenfalls in Längsrichtung der Luftleitung 10 und somit in Strömungsrichtung erstrecken.

Der Mantel 1 umfasst zur Ausbildung des Luftleitabschnitts 3 und der Vertiefung 4 zweckmäßig ein und denselben Mantelabschnitt. Der Mantelabschnitt ist nach innen geformt, so dass der Mantelabschnitt innenseitig konvex ausgebildet ist, um den Luftleitabschnitt 3 zu bilden, und zugleich außenseitig konkav ausgebildet ist, um die Vertiefung 4 zu bilden.

Der Luftleitabschnitt 3 bildet und umfasst zumindest zwei vorzugsweise rinnenförmige Strömungskanäle 2.1, 2.2 im Strömungsquerschnitt 2. Die zwei Strömungskanäle 2.1, 2.2 sind zweckmäßig mit einem Hauptströmungsabschnitt 2.3 des Strömungsquerschnitts 2 verbunden, um den Strömungsquerschnitt 2 zu bilden.

Der Luftleitabschnitt 3, die Vertiefung 4 und die Durchlassöffnung KE erstrecken sich zweckmäßig im Kurvenabschnitt 10.1 und zwar vorzugsweise im radial äußeren Teilbereich T2

Der Mantel 1 und/oder der Strömungsquerschnitt 2 können zweckmäßig im radial inneren Teilbereich T1 schmäler sein als im radial äußeren Teilbereich T2, so dass sie zweckmäßig im Bereich des Luftleitabschnitts 3 breiter sein können als im Bereich gegenüber dem Luftleitabschnitt 3. Besonders bevorzugt ist, wenn der Mantel 1 und/oder der Strömungsquerschnitt 2 sich von den zwei Strömungskanälen 2.1, 2.2 nach radial einwärts verjüngt. Der Mantel 1 und/oder der Strömungsquerschnitt 2 kann somit im Wesentlichen U- oder im Wesentlichen V-förmig ausgeformt sein.

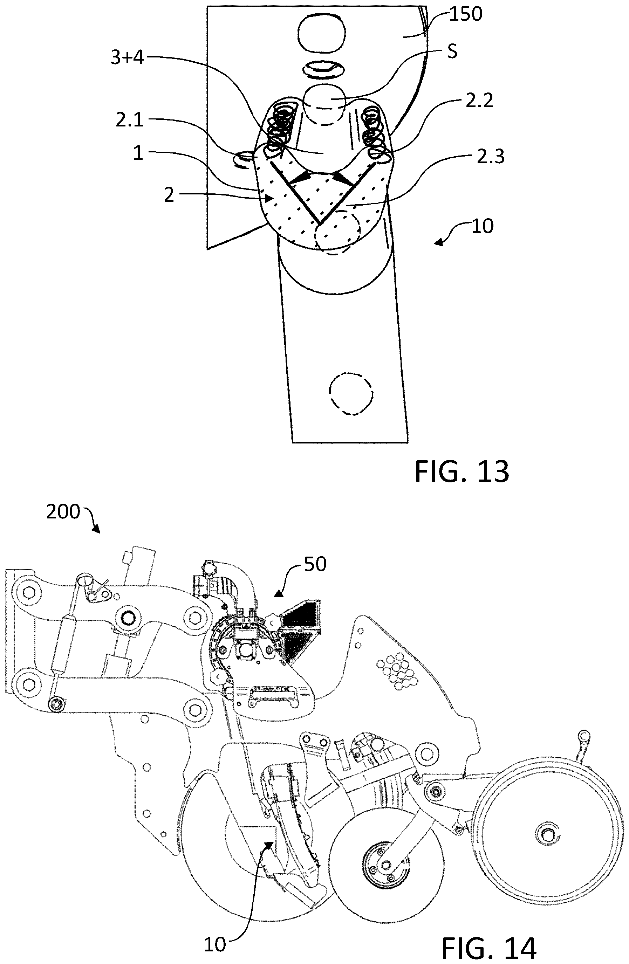

Auch der Luftleitabschnitt 3 per se kann sich im Querschnitt radial einwärts verjüngen, z. B. mittels zweier zulaufender Seitenabschnitte (z. B. Figur 13). In und entlang der mittels des Luftleitabschnitts 3 erzeugten Strömungskanäle 2.1, 2.2 können Luftverwirbelungen erzeugt werden, welche zu der erwünschten Luftströmungskonzentration beitragen können und allgemeinen positiven Effekt auf die Luftleitung-/führung aufweisen können.

Allerdings ist es darüber hinaus auch möglich, dass sich der Strömungsquerschnitt 2, z. B. die Strömungskanäle 2.1, 2.2, der Hauptströmungsabschnitt 2.3, der Luftleitabschnitt 3, die Vertiefung 4 und vorzugsweise auch die Durchlassöffnung KE in Strömungsrichtung verjüngen.

Der Mantel 1 und insbesondere der Strömungsquerschnitt 2 kann sich somit in Strömungsrichtung und vom radial äußeren Teilbereich T2 radial einwärts verjüngen und zwar insbesondere im Kurvenabschnitt 10.1.

Das Bezugszeichen 152 kennzeichnet den Kontaktbereich der Luftströmung L mit dem Vereinzelungsorgan 150.

Figur 14 zeigt eine Seitenansicht einer Reiheneinheit 200 mit einer landwirtschaftlichen Maschine 50 gemäß einer Ausführungsform der Erfindung.

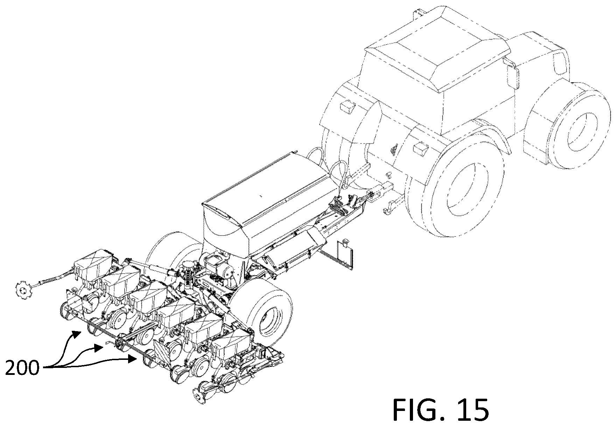

Figur 15 zeigt eine Perspektivansicht einer landwirtschaftlichen Vorrichtung mit beispielhaft sechs Reiheneinheiten 200, wobei lediglich drei davon mit dem Bezugszeichen 200 versehen sind.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 10: Luftleitung
- 1: Mantel
- 2: Strömungsquerschnitt
- 2.1: Strömungskanal
- 2.2: Strömungskanal
- 2.3: Hauptströmungsabschnitt
- M: Mitte des Strömungsquerschnitts und/oder Flächenschwerpunkt des Strömungsquerschnitts
- 3: Luftleitabschnitt
- 4: Vertiefung
- L: Luftströmung
- KE: Durchlassöffnung
- T1: radial innerer Teilbereich
- T2: radial äußerer Teilbereich
- D1: Druckluftzufuhr
- D2: Druckluftzufuhr

- 50: Landwirtschaftliche Maschine, vorzugsweise Vereinzelungsvorrichtung
- 150: Vereinzelungsorgan, vorzugsweise Vereinzelungsscheibe
- 151: Aussparungen
- 152: Kontaktbereich zum Vereinzelungsorgan
- UE: Druckdifferenz-Unterbrechungseinrichtung
- S: Körner

- 200: Reiheneinheit

## Patentansprüche

1. Landwirtschaftliche Maschine (50), mit einer Luftleitung (10), die einen Mantel (1) und einen Strömungsquerschnitt (2) zum Leiten einer Luftströmung (L) aufweist, wobei die landwirtschaftliche Maschine (50) eine Vereinzelungsvorrichtung (50) zur Druckdifferenz-basierten Vereinzelung von Körnern (S) umfasst und die Luftleitung (10) als Druckluftleitung dient, um vereinzelte Körner (S) Druckluft-unterstützt zum Ackerboden zu transportieren,
wobei die Luftleitung (10) zumindest einen Luftleitabschnitt (3) aufweist, um die Luftströmung (L) radial einwärts zu lenken,
wobei der Mantel (1) in seiner Mantelfläche eine Durchlassöffnung (KE) aufweist und der Mantel (1) nach innen geformt ist, um eine Vertiefung (4) in Richtung der Durchlassöffnung (KE) zu bilden, **dadurch gekennzeichnet,**
- **dass** die Luftleitung (10) einen Kurvenabschnitt (10.1) mit einem radial inneren Teilbereich (T1) und einem radial äußeren Teilbereich (T2) aufweist, und
- **dass** der Strömungsquerschnitt (2) sich im Kurvenabschnitt (10.1) in Strömungsrichtung verjüngt und vom radial äußeren Teilbereich (T2) des Kurvenabschnitts (10.1) nach radial innen verjüngt.

2. Landwirtschaftliche Maschine (50) nach Anspruch 1, **dadurch gekennzeichnet, dass** der Luftleitabschnitt (3) zumindest zwei vorzugsweise rinnenförmige Strömungskanäle (2.1, 2.2) im Strömungsquerschnitt (2) bildet und vorzugsweise die zwei Strömungskanäle (2.1, 2.2) mit einem Hauptströmungsabschnitt (2.3) des Strömungsquerschnitts (2) verbunden sind.

3. Landwirtschaftliche Maschine (50) nach Anspruch 1 oder 2, **dadurch gekennzeichnet, dass** im Kurvenabschnitt (10.1), vorzugsweise im radial äußeren Teilbereich (T2) des Kurvenabschnitts (10.1), angeordnet ist:
- der Luftleitabschnitt (3), und/oder
- die Vertiefung (4), und/oder
- die Durchlassöffnung (KE).

4. Landwirtschaftliche Maschine (50) nach einem der Ansprüche 2 oder 3, wenn auf Anspruch 2 bezogen, **dadurch gekennzeichnet, dass** der Mantel (1) und/oder der Strömungsquerschnitt (2) sich von den zwei Strömungskanälen (2.1, 2.2) nach radial einwärts verjüngt und vorzugsweise die Strömungskanäle (2.1, 2.2) sich in Strömungsrichtung verjüngen.

5. Landwirtschaftliche Maschine (50) nach einem der vorhergehenden Ansprüche, **dadurch gekennzeichnet, dass** der Mantel (1) und/oder der Strömungsquerschnitt (2)
- zum radial inneren Teilbereich (T1) hin schmäler ist als zum radial äußeren Teilbereich (T2) hin, und/oder
- im Bereich des Luftleitabschnitts (3) breiter ist als im Bereich gegenüber dem Luftleitabschnitt (3).

6. Landwirtschaftliche Maschine (50) nach einem der vorhergehenden Ansprüche, **dadurch gekennzeichnet, dass** der Mantel (1) einen nach innen geformten Mantelabschnitt aufweist und der Mantelabschnitt innenseitig konvex ausgebildet ist, um den Luftleitabschnitt (3) zu bilden, und zugleich außenseitig konkav ausgebildet ist, um die Vertiefung (4) zu bilden.

7. Landwirtschaftliche Maschine (50) nach einem der vorhergehenden Ansprüche, **dadurch gekennzeichnet, dass**
- der Luftleitabschnitt (3) als länglicher Vorsprung ausgebildet ist, vorzugsweise sich in Längsrichtung der Luftleitung (10) erstreckend, und/oder
- die Vertiefung (4) zumindest abschnittsweise trichterförmig und/oder rinnenförmig ausgebildet ist, vorzugsweise sich in Längsrichtung der Luftleitung (10) erstreckend.

8. Landwirtschaftliche Maschine (50) nach einem der vorhergehenden Ansprüche, **dadurch gekennzeichnet, dass** der Luftleitabschnitt (3) und/oder die Vertiefung (4) zur Durchlassöffnung (KE) führt.

9. Landwirtschaftliche Maschine (50) nach einem der vorhergehenden Ansprüche, **dadurch gekennzeichnet, dass** der Mantel (1) und/oder der Strömungsquerschnitt (2) im Wesentlichen U- oder V-förmig ausgebildet ist.

10. Landwirtschaftliche Maschine (50) nach einem der vorhergehenden Ansprüche, **dadurch gekennzeichnet, dass** die Luftleitung (10) in Strömungsrichtung hinter dem Kurvenabschnitt (10.1) einen im Wesentlichen geradlinigen Teilabschnitt (10.2) aufweist.

11. Landwirtschaftliche Maschine (50) nach einem der vorhergehenden Ansprüche, **dadurch gekennzeichnet, dass** der Luftleitabschnitt (3) die Luftströmung (L) einwärts lenkt, um die Luftströmung (L) insbesondere radial einwärts zu konzentrieren und/oder vom Innenumfang des Mantels (1) radial einwärts beabstandet zu konzentrieren.

12. Landwirtschaftliche Maschine (50) nach einem der vorhergehenden Ansprüche, **dadurch gekennzeichnet, dass** der Luftleitabschnitt (3) die Luftströmung (L) radial einwärts lenkt,
um die Luftströmung (L) im Wesentlichen im Flächenschwerpunkt (M) des Strömungsquerschnitts (2) und/oder im Wesentlichen in der Mitte (M) des Strömungsquerschnitts (2) zu konzentrieren.

13. Landwirtschaftliche Maschine (50) nach einem der vorhergehenden Ansprüche, **dadurch gekennzeichnet, dass** die Vertiefung (4) in der Durchlassöffnung (KE) mündet und einen Eingang in die Durchlassöffnung (KE) bildet.

14. Landwirtschaftliche Maschine (50) nach einem der vorhergehenden Ansprüche, **dadurch gekennzeichnet, dass** zumindest eines von folgendem sich in Strömungsrichtung verjüngt:
- der Strömungsquerschnitt (2),
- der Luftleitabschnitt (3),
- die Vertiefung (4),
- die Durchlassöffnung (KE).

15. Landwirtschaftliche Maschine (50) nach einem der vorhergehenden Ansprüche, **dadurch gekennzeichnet, dass** der Luftleitabschnitt (3) sich im Querschnitt radial einwärts verjüngt.

16. Landwirtschaftliche Maschine (50) nach einem der vorhergehenden Ansprüche, **dadurch gekennzeichnet, dass** die Vereinzelungsvorrichtung (50) ein drehbares Vereinzelungsorgan (150) mit einer Vielzahl an Aussparungen (151) zum Vereinzeln von Körnern (S) aufweist und
- die Vertiefung (4) angeordnet ist, um vom Vereinzelungsorgan (150) vereinzelte und gelöste Körner (S) aufzunehmen und zur Durchlassöffnung (KE) zu führen, und/oder
- vereinzelte Körner (S) über die Durchlassöffnung (KE) in die Luftleitung (10) einführbar sind, um von der radial einwärts gelenkten und konzentrierten Luftströmung (L) mitgerissen und transportiert zu werden.

17. Landwirtschaftliche Maschine (50) nach einem der vorhergehenden Ansprüche, **dadurch gekennzeichnet, dass** der Luftleitabschnitt (3) die Luftströmung (L) einwärts lenkt, um Körner (S) einwärts zu lenken und/oder vom Innenumfang des Mantels (1) radial einwärts zu beabstanden.

18. Landwirtschaftliche Maschine (50) nach einem der vorhergehenden Ansprüche, **dadurch gekennzeichnet, dass** die Durchlassöffnung (KE) abschnittsweise durch das Vereinzelungsorgan (150) geschlossen wird und/oder die Durchlassöffnung (KE) gegenüber einer Druckdifferenz-Unterbrechungseinrichtung (UE) angeordnet ist.

19. Landwirtschaftliche Maschine (50) nach einem der vorhergehenden Ansprüche, **dadurch gekennzeichnet, dass** die Vereinzelungsvorrichtung (50) eine erste Druckluftzufuhr (D1) zur Erzeugung der Luftströmung (L) in der Luftleitung (10) aufweist und eine zweite Druckluftzufuhr (D2) zur Erzeugung der Druckdifferenz zum Halten der Körner (S) am Vereinzelungsorgan (150) aufweist.

20. Landwirtschaftliche Maschine (50) nach Anspruch 19, **dadurch gekennzeichnet, dass** sich entlang der Durchlassöffnung (KE) eine Strömungsbarriere und/oder ein Coandá-Effekt einstellt und vorzugsweise Druckluft aus der ersten Druckluftzufuhr (D1) und Druckluft aus der zweiten Druckluftzufuhr (D2) aufeinander einwirken, so dass Druckluft aus der zweiten Druckluftzufuhr (D2) an einem Eindringen über die Durchlassöffnung (KE) in die Luftleitung (10) gehindert wird.

21. Reiheneinheit (200) mit einer landwirtschaftlichen Maschine (50) nach einem der vorhergehenden Ansprüche.

## Claims

1. Agricultural machine (50) having an air line (10) which has a casing (1) and has a flow cross section (2) for guiding an air flow (L), wherein the agricultural machine (50) comprises a separating apparatus (50) for pressure-difference-based separation of grains (S) and the air line (10) serves as a compressed-air line for transporting separated grains (S) to the arable soil in a manner assisted by compressed air, wherein the air line (10) has at least one air-guiding portion (3) for directing the air flow (L) radially inwards, wherein the casing (1) has a passage opening (KE) in its casing surface and the casing (1) is deformed inwards so as to form a depression (4) in the direction of the passage opening (KE), **characterized**
- **in that** the air line (10) has a curved portion (10.1) with a radially inner sub-region (T1) and with a radially outer sub-region (T2), and
- **in that** the flow cross section (2) tapers in the flow direction in the curved section (10.1) and tapers radially inwards from the radially outer sub-region (T2) of the curved portion (10.1).

2. Agricultural machine (50) according to Claim 1, **characterized in that** the air-guiding portion (3) forms at least two preferably groove-shaped flow channels (2.1, 2.2) in the flow cross section (2), and preferably the two flow channels (2.1, 2.2) are connected to a main-flow portion (2.3) of the flow cross section (2).

3. Agricultural machine (50) according to Claim 1 or 2, **characterized in that** arranged in the curved portion (10.1), preferably in the radially outer sub-region (T2) of the curved portion (10.1), are/is:
- the air-guiding portion (3) and/or
- the depression (4) and/or
- the passage opening (KE).

4. Agricultural machine (50) according to either Claim 2 or Claim 3 where related to Claim 2, **characterized in that** the casing (1) and/or the flow cross section (2) taper (s) radially inwards from the two flow channels (2.1, 2.2), and preferably the flow channels (2.1, 2.2) taper in the flow direction.

5. Agricultural machine (50) according to one of the preceding claims, **characterized in that** the casing (1) and/or the flow cross section (2)
- are/is narrower towards the radially inner sub-region (T1) than towards the radially outer sub-region (T2), and/or
- are/is wider in the region of the air-guiding portion (3) than in the region opposite the air-guiding portion (3).

6. Agricultural machine (50) according to one of the preceding claims, **characterized in that** the casing (1) has an inwardly deformed casing portion, and the casing portion is of convex form at the inner side, so as to form the air-guiding portion (3), and at the same time is of concave form at the outer side, so as to form the depression (4).

7. Agricultural machine (50) according to one of the preceding claims, **characterized in that**
- the air-guiding portion (3) is formed as an elongate projection, preferably so as to extend in the longitudinal direction of the air line (10), and/or
- the depression (4) is of at least sectionally funnel-shaped and/or groove-shaped form, preferably so as to extend in the longitudinal direction of the air line (10).

8. Agricultural machine (50) according to one of the preceding claims, **characterized in that** the air-guiding portion (3) and/or the depression (4) lead(s) to the passage opening (KE).

9. Agricultural machine (50) according to one of the preceding claims, **characterized in that** the casing (1) and/or the flow cross section (2) are/is of substantially U-shaped or V-shaped form.

10. Agricultural machine (50) according to one of the preceding claims, **characterized in that** the air line (10) has a substantially straight sub-portion (10.2) behind the curved portion (10.1) in the flow direction.

11. Agricultural machine (50) according to one of the preceding claims, **characterized in that** air-guiding portion (3) directs the air flow (L) inwards so as to concentrate the air flow (L) in particular radially inwards and/or spaced radially inwardly apart from the inner circumference of the casing (1) .

12. Agricultural machine (50) according to one of the preceding claims, **characterized in that** the air-guiding portion (3) directs the air flow (L) radially inwards so as to concentrate the air flow (L) substantially in the centroid (M) of the flow cross section (2) and/or substantially in the middle (M) of the flow cross section (2).

13. Agricultural machine (50) according to one of the preceding claims, **characterized in that** the depression (4) opens out in the passage opening (KE) and forms an entry into the passage opening (KE).

14. Agricultural machine (50) according to one of the preceding claims, **characterized in that** at least one of the following tapers in the flow direction:
- the flow cross section (2),
- the air-guiding portion (3),
- the depression (4),
- the passage opening (KE).

15. Agricultural machine (50) according to one of the preceding claims, **characterized in that** the air-guiding portion (3) tapers radially inwards in cross section.

16. Agricultural machine (50) according to one of the preceding claims, **characterized in that** the separating apparatus (50) has a rotatable separating member (150) with a multiplicity of cutouts (151) for separation of grains (S), and
- the depression (4) is arranged so as to receive grains (S) separated and released by the separating member (150) and to guide them to the passage opening (KE), and/or
- separated grains (S) are introducible into the air line (10) via the passage opening (KE) so as to be entrained and transported by the radially inwardly directed and concentrated air flow (L).

17. Agricultural machine (50) according to one of the preceding claims, **characterized in that** the air-guiding portion (3) directs the air flow (L) inwards so as to direct grains (S) inwards and/or to space them radially inwardly apart from the inner circumference of the casing (1).

18. Agricultural machine (50) according to one of the preceding claims, **characterized in that** the passage opening (KE) is sectionally closed by the separating member (150), and/or the passage opening (KE) is arranged opposite a pressure-difference-interruption device (UE).

19. Agricultural machine (50) according to one of the preceding claims, **characterized in that** the separating device (50) has a first compressed-air supply (D1) for generating the air flow (L) in the air line (10) and has a second compressed-air supply (D2) for generating the pressure difference for holding the grains (S) on the separating member (150) .

20. Agricultural machine (50) according to Claim 19, **characterized in that**, along the passage opening (KE), a flow barrier and/or a Coand 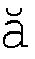 effect are/is established, and preferably compressed air from the first compressed-air supply (D1) and compressed air from the second compressed-air supply (D2) act on one another such that compressed air from the second compressed-air supply (D2) is prevented from entering the air line (10) through the passage opening (KE).

21. Row unit (200) having an agricultural machine (50) according to one of the preceding claims.

## Revendications

1. Machine agricole (50), comportant une conduite d'air (10) qui présente une enveloppe (1) et une section transversale d'écoulement (2) pour guider un écoulement d'air (L), la machine agricole (50) comprenant un dispositif de séparation (50) pour la séparation, sur la base d'une différence de pression, de grains (S) et la conduite d'air (10) servant de conduite d'air comprimé, afin de transporter des grains séparés (S) jusqu'à la terre cultivable à l'aide de l'air comprimé,
la conduite d'air (10) présentant au moins une partie de guidage d'air (3), afin de diriger l'écoulement d'air (L) radialement vers l'intérieur,
l'enveloppe (1) présentant dans sa surface d'enveloppe une ouverture de passage (KE) et l'enveloppe (1) étant façonnée vers l'intérieur, afin de former un renfoncement (4) en direction de l'ouverture de passage (KE), **caractérisée**
- **en ce que** la conduite d'air (10) présente une partie incurvée (10.1) comportant une région partielle (T1) radialement intérieure et une région partielle (T2) radialement extérieure, et
- **en ce que** la section transversale d'écoulement (2) se rétrécit dans la direction d'écoulement dans la partie incurvée (10.1) et se rétrécit radialement vers l'intérieur à partir de la région partielle (T2) radialement extérieure de la partie incurvée (10.1).

2. Machine agricole (50) selon la revendication 1, **caractérisée en ce que** la partie de guidage d'air (3) forme au moins deux canaux d'écoulement (2.1, 2.2) de préférence en forme de rigoles dans la section transversale d'écoulement (2) et de préférence les deux canaux d'écoulement (2.1, 2.2) sont reliés à une partie d'écoulement principal (2.3) de la section transversale d'écoulement (2).

3. Machine agricole (50) selon la revendication 1 ou 2, **caractérisée en ce que** dans la partie incurvée (10.1), de préférence dans la région partielle (T2) radialement extérieure de la partie incurvée (10.1), sont disposés :
- la partie de guidage d'air (3), et/ou
- le renfoncement (4), et/ou
- l'ouverture de passage (KE).

4. Machine agricole (50) selon l'une des revendications 2 ou 3, lorsqu'elle se rapporte à la revendication 2, **caractérisée en ce que** l'enveloppe (1) et/ou la section transversale d'écoulement (2) se rétrécissent radialement vers l'intérieur à partir des deux canaux d'écoulement (2.1, 2.2) et de préférence les canaux d'écoulement (2.1, 2.2) se rétrécissent dans la direction d'écoulement.

5. Machine agricole (50) selon l'une des revendications précédentes, **caractérisée en ce que** l'enveloppe (1) et/ou la section transversale d'écoulement (2)
- sont plus étroites en direction de la région partielle (T1) radialement intérieure qu'en direction de la région partielle (T2) radialement extérieure, et/ou
- sont plus larges dans la région de la partie de guidage d'air (3) que dans la région en regard de la partie de guidage d'air (3).

6. Machine agricole (50) selon l'une des revendications précédentes, **caractérisée en ce que** l'enveloppe (1) présente une partie d'enveloppe façonnée vers l'intérieur et la partie d'enveloppe est réalisée de manière convexe du côté intérieur, afin de former la partie de guidage d'air (3), et est réalisée en même temps de manière concave du côté extérieur, afin de former le renfoncement (4) .

7. Machine agricole (50) selon l'une des revendications précédentes, **caractérisée en ce que**
- la partie de guidage d'air (3) est réalisée sous forme de saillie allongée, de préférence s'étendant dans la direction longitudinale de la conduite d'air (10), et/ou
- le renfoncement (4) est réalisé au moins dans certaines parties en forme d'entonnoir et/ou en forme de rigole, de préférence s'étendant dans la direction longitudinale de la conduite d'air (10).

8. Machine agricole (50) selon l'une des revendications précédentes, **caractérisée en ce que** la partie de guidage d'air (3) et/ou le renfoncement (4) mènent jusqu'à l'ouverture de passage (KE).

9. Machine agricole (50) selon l'une des revendications précédentes, **caractérisée en ce que** l'enveloppe (1) et/ou la section transversale d'écoulement (2) sont réalisées sensiblement en forme de U ou en forme de V.

10. Machine agricole (50) selon l'une des revendications précédentes, **caractérisée en ce que** la conduite d'air (10) présente une sous-partie (10.2) sensiblement rectiligne derrière la partie incurvée (10.1) dans la direction d'écoulement.

11. Machine agricole (50) selon l'une des revendications précédentes, **caractérisée en ce que** la partie de guidage d'air (3) dirige l'écoulement d'air (L) vers l'intérieur, afin de concentrer l'écoulement d'air (L) en particulier radialement vers l'intérieur et/ou de le concentrer de manière espacée de la périphérie intérieure de l'enveloppe (1) radialement vers l'intérieur.

12. Machine agricole (50) selon l'une des revendications précédentes, **caractérisée en ce que** la partie de guidage d'air (3) dirige l'écoulement d'air (L) radialement vers l'intérieur,
afin de concentrer l'écoulement d'air (L) sensiblement dans le centroïde (M) de la section transversale d'écoulement (2) et/ou sensiblement au centre (M) de la section transversale d'écoulement (2).

13. Machine agricole (50) selon l'une des revendications précédentes, **caractérisée en ce que** le renfoncement (4) débouche dans l'ouverture de passage (KE) et forme une entrée dans l'ouverture de passage (KE).

14. Machine agricole (50) selon l'une des revendications précédentes, **caractérisée en ce qu'**au moins l'un des éléments suivants se rétrécit dans la direction d'écoulement :
- la section transversale d'écoulement (2),
- la partie de guidage d'air (3),
- le renfoncement (4),
- l'ouverture de passage (KE).

15. Machine agricole (50) selon l'une des revendications précédentes, **caractérisée en ce que** la partie de guidage d'air (3) se rétrécit radialement vers l'intérieur dans la section transversale.

16. Machine agricole (50) selon l'une des revendications précédentes, **caractérisée en ce que** le dispositif de séparation (50) présente un organe de séparation (150) rotatif comportant une pluralité d'évidements (151) pour séparer des grains (S) et
- le renfoncement (4) est disposé pour recevoir des grains (S) séparés et libérés par l'organe de séparation (150) et pour les guider jusqu'à l'ouverture de passage (KE), et/ou
- des grains (S) séparés peuvent être introduits dans la conduite d'air (10) via l'ouverture de passage (KE), afin d'être entraînés et transportés par l'écoulement d'air (L) dirigé radialement vers l'intérieur et concentré.

17. Machine agricole (50) selon l'une des revendications précédentes, **caractérisée en ce que** la partie de guidage d'air (3) dirige l'écoulement d'air (L) vers l'intérieur, afin de diriger des grains (S) vers l'intérieur et/ou de les espacer de la périphérie intérieure de l'enveloppe (1) radialement vers l'intérieur.

18. Machine agricole (50) selon l'une des revendications précédentes, **caractérisée en ce que** l'ouverture de passage (KE) est fermée dans certaines parties par l'organe de séparation (150) et/ou l'ouverture de passage (KE) est disposée en regard d'un dispositif d'interruption de différence de pression (UE).

19. Machine agricole (50) selon l'une des revendications précédentes, **caractérisée en ce que** le dispositif de séparation (50) présente une première amenée d'air comprimé (D1) pour la génération de l'écoulement d'air (L) dans la conduite d'air (10) et une deuxième amenée d'air comprimé (D2) pour la génération de la différence de pression pour maintenir les grains (S) sur l'organe de séparation (150).

20. Machine agricole (50) selon la revendication 19, **caractérisée en ce qu'**une barrière d'écoulement et/ou un effet Coanda se produisent le long de l'ouverture de passage (KE) et de préférence de l'air comprimé provenant de la première amenée d'air comprimé (D1) et de l'air comprimé provenant de la deuxième amenée d'air comprimé (D2) agissent l'un sur l'autre, de sorte que de l'air comprimé provenant de la deuxième amenée d'air comprimé (D2) soit empêché de pénétrer dans la conduite d'air (10) via l'ouverture de passage (KE).

21. Unité à rangs (200) comportant une machine agricole (50) selon l'une des revendications précédentes.
